# EUROPEAN PATENT APPLICATION

(11) **EP 2 615 540 A1**
(43) Date of publication of application: **17.07.2013**
(21) Application number: 13151032.3
(22) Date of filing: 11.01.2013
(51) Int. Cl.: G06F 3/14

(54) **Dual screen electronic device and operation method thereof**

(30) Priority: 11.01.2012 US 201261585245 P; 31.05.2012 TW 101119574
(71) Applicant: E Ink Holdings Inc., Hsinchu, (TW)
(72) Inventor: Chu, Chun-Wei, Hsinchu (TW)
(74) Representative: Granleese, Rhian Jane

(57) **Abstract**

A dual screen electronic device is provided and includes a main body, a protection cover, and a first processor. The main body includes a housing having a front frame and a rear cover, and a first display screen located in the housing. The first display screen is exposed through the front frame to display a first display image. The protection cover is detachably fixed on the rear cover, and includes a second display screen to display a second display image. The first processor is located in the housing and electrically connected to the first and second display screens. The first and second display images are controlled by the first processor in accordance with an instruction inputted to the first and second display screens, such that the second display image is the same as or different from the first display image.

## Description

### BACKGROUND

### Technical Field

The present disclosure relates to a dual screen electronic device and an operation method thereof.

### Description of Related Art

Nowadays, in the market of various consumer electronic products, a touch screen has been extensively utilized in portable electronic devices to be a main communication element between a user and an electronic device, such as a personal digital assistant (PDA), a cellular phone, a global positioning system (GPS), or a tablet personal computer. When using an electronic device with the touch screen, a user may input an instruction via the touch screen, and does not need use a conventional keyboard, such that the electronic device has a humanity operation interface.

In recent years, the touch screen may include a bi-stable display device, besides a resistive touch panel and a capacitive touch panel in general, such as an electrophoretic display device. The electrophoretic display device has flexibility and includes an electronic ink layer with a plurality of microcapsules. Each of the microcapsules has positive charges, negative charges, and a transparent fluid. The positive charges and the negative charges have different colors, such as black and white. When an electric field in the electrophoretic display device is changed, the differently colored positive charges and negative charges move upward or downward in accordance with the directions of the electric field, such that the microcapsules display different colors, such as black or white. Therefore, a user can see images displayed by the electrophoretic display device.

A conventional portable electronic device includes a housing and a touch screen. The touch screen is located in the housing and protrudes through a surface of the housing. In use, since the portable electronic device only has one single touch screen, the portable electronic device is only suitable for use by one user. For example, when another user wants to see the touch screen at the same time, he or she needs to be located by the side of the touch screen, and thus cannot see images clearly. Furthermore, when another user also wants to operate the touch screen, the original user has to pass the electronic device to the another user, thus causing inconvenience.

### SUMMARY

An aspect of the present invention is to provide a dual screen electronic device.

In an embodiment of the present invention, the dual screen electronic device includes a main body, a protection cover, and a first processor. The main body includes a housing and a first display screen. The housing includes a front frame and a rear cover. The first display screen is located in the housing and is exposed through the front frame to display a first display image. The protection cover is detachably fixed on the rear cover and includes a second display screen to display a second display image. The first processor is located in the housing and is electrically connected to the first display screen and the second display screen. The second display image and the first display image are controlled by the first processor in accordance with an instruction inputted to the second display screen and the first display screen, such that the second display image is the same as or different from the first display image.

An aspect of the present invention is to provide an operation method of a dual screen electronic device.

In an embodiment of the present invention, in the operation method, a main body including a first display screen is provided, and a protection cover including a second display screen is provided. Then, the protection cover is detachably fixed to the main body, such that the second display screen is electrically connected to the first display screen. Thereafter, an instruction is inputted to the first display screen or the second display screen. The first display screen and the second display screen can be synchronously updated and synchronously display images, non-synchronously updated and non-synchronously display images, be synchronously updated but non-synchronously display images, or be non-synchronously updated but synchronously display images.

In the aforementioned embodiments of the present invention, when the protection cover including the second display screen is fixed on the rear cover, the first display screen and the second display screen are electrically connected to the first processor. Hence, the second display image and the first display image can be controlled by the first processor in accordance with the instruction inputted to the second display screen and the first display screen. That is to say that the dual screen electronic device has the second display screen provided by the protection cover detachably fixed on the main body, such that the dual screen electronic device can be used by one single person or a plurality of persons.

For example, when one single person uses the dual screen electronic device, the protection cover may not be assembled to the main body. In this case, the main body including the first display screen can be independently operated. When two persons use the dual screen electronic device at the same time, the protection cover may be assembled to the main body. Consequently, the first display screen and the second display screen can be set to be synchronously updated and synchronously display images, be non-synchronously updated and non-synchronously display images, be synchronously updated but non-synchronously display images, or be non-synchronously updated but synchronously display images by the first processor in accordance with practical requirements. Therefore, the dual screen electronic device can be seen and operated by the two persons at the same time.

### BRIEF DESCRIPTION OF THE DRAWINGS

Fig. 1A is an exploded view of a dual screen electronic device according to an embodiment of the present invention;
Fig. 1 B is a side view of the dual screen electronic device shown in Fig. 1A after a protection cover is assembled to a main body;
Fig. 2 is a perspective view of the protection cover shown in Fig. 1A;
Fig. 3 is a block diagram of a dual screen electronic device according to an embodiment of the present invention;
Fig. 4 is a block diagram of a dual screen electronic device according to an embodiment of the present invention;
Fig. 5 is a block diagram of a dual screen electronic device according to an embodiment of the present invention;
Fig. 6 is a block diagram of a dual screen electronic device according to an embodiment of the present invention;
Fig. 7 is a block diagram of a dual screen electronic device according to an embodiment of the present invention;
Fig. 8 is a block diagram of a dual screen electronic device according to an embodiment of the present invention;
Fig. 9 is a block diagram of a dual screen electronic device according to an embodiment of the present invention;
Fig. 10 is a block diagram of a dual screen electronic device connected to a network service server according to an embodiment of the present invention;
Fig. 11 is a flow chart showing an operation method of the dual screen electronic device shown in Fig. 1B; and
Fig. 12 is a flow chart showing an operation method of the dual screen electronic device shown in Fig. 1 B when the dual screen electronic device is connected to the network service server.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

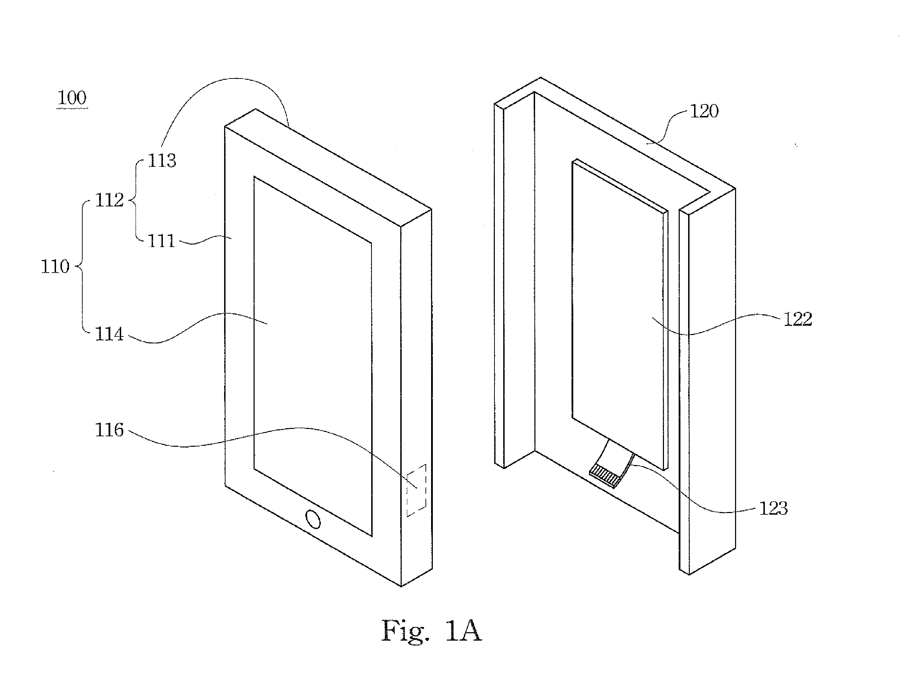

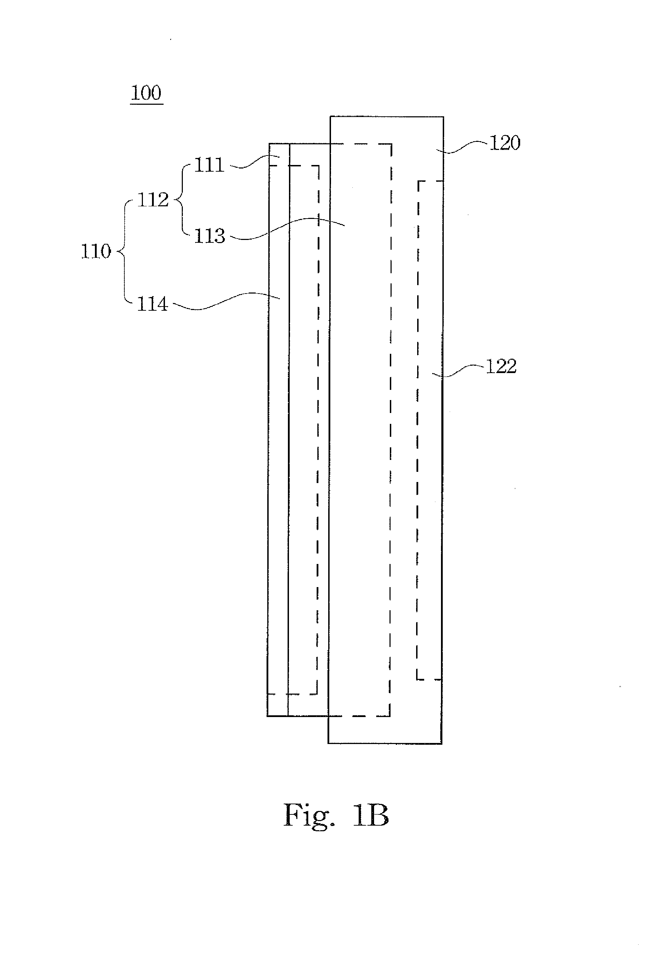

Fig. 1A is an exploded view of a dual screen electronic device 100 according to an embodiment of the present invention. Fig. 1 B is a side view of the dual screen electronic device 100 shown in Fig. 1A after a protection cover 120 is assembled to a main body 110. As shown in Fig. 1A and Fig. 1 B, the dual screen electronic device 100 includes the main body 110, the protection cover 120, and a first processor 116. The main body 110 includes a housing 112 and a first display screen 114. The housing 112 includes a front frame 111 and a rear cover 113. The first display screen 114 is located in the housing 112 and is exposed through the front frame 111 to display a first display image. The first processor 116 is located in the housing 112 and is electrically connected to the first display screen 114. In this embodiment, the main body 110 is an electronic device which can be operated independently.

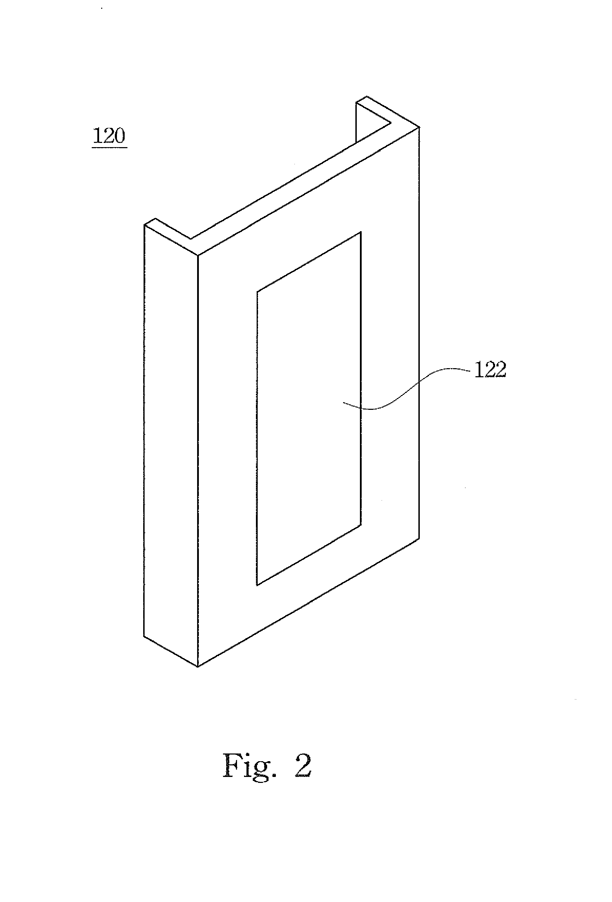

Fig. 2 is a perspective view of the protection cover 120 shown in Fig. 1A.
As shown in Fig. 1A and Fig. 2, the protection cover 120 is detachably fixed on the rear cover 113 and includes a second display screen 122 to display a second display image. In this disclosure, the first display screen 114 and the second display screen 122 may be touch panels selectively. That is, the first display screen 114 and the second display screen 122 may both be touch panels, or one of the first display screen 114 and the second display screen 122 is a touch panel. The first display screen 114 and the second display screen 122 can be determined in accordance with designers' practical requirements, and the present invention is not limited in this regard.

When the protection cover 120 is fixed on the rear cover 113, the second display screen 122 can be electrically connected to the first processor 116 by a flexible printed circuit board (FPC) 123 so as to display a second display image. The second display image and the first display image can be controlled by the first processor 116 in accordance with an instruction inputted to the second display screen 122 and the first display screen 114. For example, the second display screen 122 and the first display screen 114 can be set to be synchronously updated and synchronously display images, non-synchronously updated and non-synchronously display images, synchronously updated but non-synchronously display images, or non-synchronously updated but synchronously display images by using the software stored in the first processor 116 or the main body 110.

The first display screen 114 and the second display screen 122 which are synchronously updated and synchronously display images may allow an user to independently operate the first display screen 114 or the second display screen 122, and enable the first display screen 114 and the second display screen 122 to display the same image. That is, the second display image and the first display image are mirror images. When any one of the first display screen 114 and the second display screen 122 is operated by the user, the first display screen 114 and the second display screen 122 have the aforementioned display effect. For example, usage timing of synchronously updating and synchronously displaying the first display screen 114 and the second display screen 122 may be that, when the user introduces a product to a consumer facing the user, or when the user wants another person facing the user to see a video at the same time.

Moreover, the first display screen 114 and the second display screen 122 which are non-synchronously updated and non-synchronously display images mean that users can operates the first display screen 114 and the second display screen 122 at the same time, and the first display screen 114 and the second display screen 122 display different images. That is, the second display image and the first display image are independent images and do not interfere with each other. Hence, the first display screen 114 and the second display screen 122 can respectively be operated by the users. For example, usage timing of non-synchronously updating and non-synchronously displaying the first display screen 114 and the second display screen 122 may be that, when an user wants to surf internet and another user wants to see a video, the two users can respectively operate the first display screen 114 and the second display screen 122.

Furthermore, the first display screen 114 and the second display screen 122 are synchronously updated but non-synchronously display images mean that users can operates the first display screen 114 and the second display screen 122 at the same time, and a portion of the first display screen 114 and a portion of the second display screen 122 display the same image, and another portion of the first display screen 114 and another portion of the second display screen 122 display different images. That is, although the second display image and the first display image are different, but a portion of each image can be synchronously updated. For example, usage timing of synchronously updating but non-synchronously displaying the first display screen 114 and the second display screen 122 may be that, when two users play a double game (e.g., racing car and ball games), the two users can respectively operate the first display screen 114 and the second display screen 122.

In addition, the first display screen 114 and the second display screen 122 which are non-synchronously updated but synchronously display images means that an user can independently operate the first display screen 114 or the second display screen 122, and the first display screen 114 and the second display screen 122 display different images. For example, usage timing of non-synchronously updating but synchronously displaying the first display screen 114 and the second display screen 122 may be that, when the user only wants to change the desktop image of the first display screen 114, but do not want to change the desktop image of the second display screen 122.

Practically, when the protection cover 120 including the second display screen 122 is fixed on the rear cover 113, the first display screen 114 and the second display screen 122 are both electrically connected to the first processor 116. That is to say that the dual screen electronic device 100 has the second display screen 122 provided by the protection cover 120 detachably fixed on the main body 110, such that the dual screen electronic device 100 can be used by a single person or a plurality of persons.

For example, when a single user uses the dual screen electronic device 100, the protection cover 120 may not be assembled to the main body 110. In this case, the main body 110 including the first display screen 114 can independently work and be operated. When two users use the dual screen electronic device100 at the same time, the protection cover 120 may be assembled to the rear cover 113 of the housing 112 of the main body 110. Consequently, the second display screen 122 and the first display screen 114 can be configured to be synchronously updated and synchronously display images, non-synchronously updated and non-synchronously display images, synchronously updated but non-synchronously display images, or non-synchronously updated but synchronously display images by the first processor 116 in accordance with users' requirements. Therefore, the dual screen electronic device 100 can be seen and operated by the two users at the same time.

Moreover, when the dual screen electronic device 100 is operated, the first display screen 114 and the second display screen 122 can detect an action thereon. When the action is corresponding to a touch instruction stored in the main body 110, the first display screen 114 or the second display screen 122 executes the touch instruction. For example, the first display screen 114 and the second display screen 122 may be customized, such that the touch instruction stored in the main body 110 or the protection cover 120 includes turning a gesture guide page, dragging or moving content, enlarging and shrinking content, sliding content, unlocking by sliding or moving, and multi touching. Users can input the same or different instructions to the main body 110 or the protection cover 120 synchronously or non-synchronously. Furthermore, the users' action may include a single finger slide, two fingers slide, a single time click, and twice clicks.

In this embodiment, the main body 110 may be a cellular phone or a tablet personal computer. The protection cover 120 may be a rear cover protection cover or a battery cover protection cover of a cellular phone or a tablet personal computer. The first display screen 114 may be a liquid crystal display panel, a bi-stable display device, a light emitting diode display panel, or an organic light emitting diode display (OLED) panel. The second display screen 122 may be a liquid crystal display panel, a bi-stable display device, a light emitting diode display panel, or an organic light emitting diode display panel. The first display screen 114 and the second display screen 122 may be flexible screens. The first display screen 114 and the second display screen 122 may be the assembly of monitors and touch panels, or be embedded touch panels, and the first display screen 114 and the second display screen 122 may have a voice control function in accordance with requirements of designers. Moreover, when the protection cover 120 has flexibility, the protection cover 120 can be conveniently fixed on or detached from the main body 110. Hence, the better choice of the second display screen 122 is a bi-stable display device having flexibility, such as an electrophoretic display (EPD). Such a design can prevent the second display screen 122 located on the protection cover 120 from being damaged when being fixed on or detached from the main body 110.

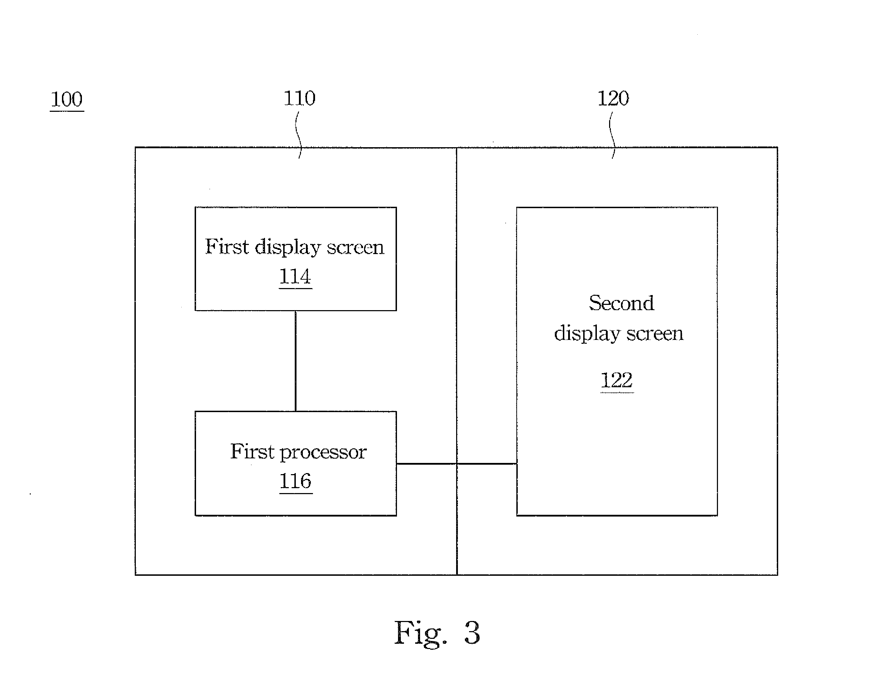

Fig. 3 is a block diagram of a dual screen electronic device 100 according to an embodiment of the present invention. In this embodiment, the first display screen 114 and the second display screen 122 are electrically connected to the first processor 116, such that the second display image and the first display image can be controlled by the first processor 116 in accordance with the instruction inputted to the second display screen 122 or the first display screen 116. In addition, the first processor 116 can be operated in coordination with the software built-in the main body 110.

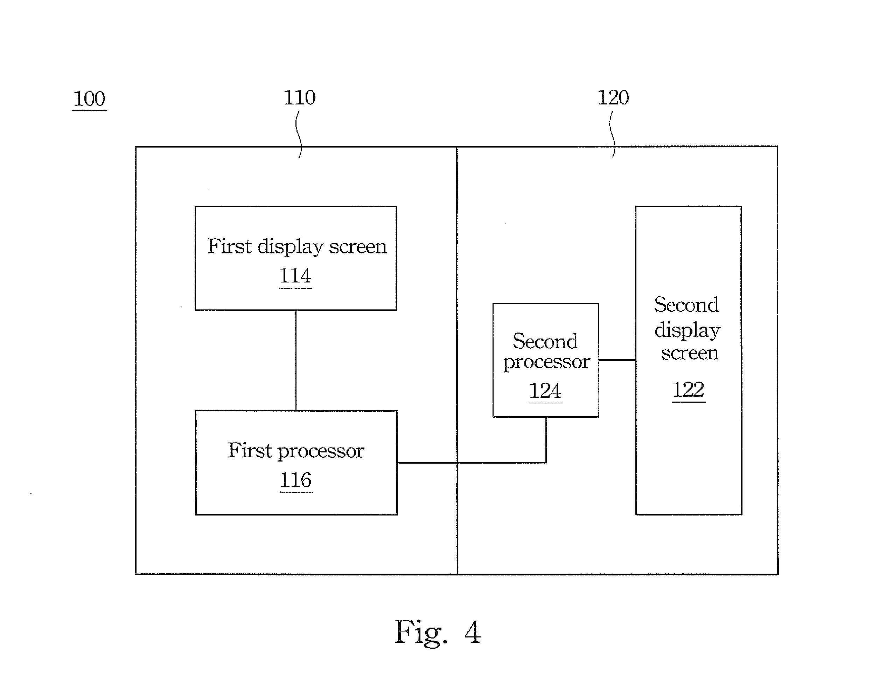

Fig. 4 is a block diagram of a dual screen electronic device 100 according to an embodiment of the present invention. The difference between this embodiment and the aforementioned embodiment is that the protection cover 120 further includes a second processor 124 electrically connected to the second display screen 122 and the first processor 116 so as to drive the second display screen 122. The second processor 124 has display and touch functions.

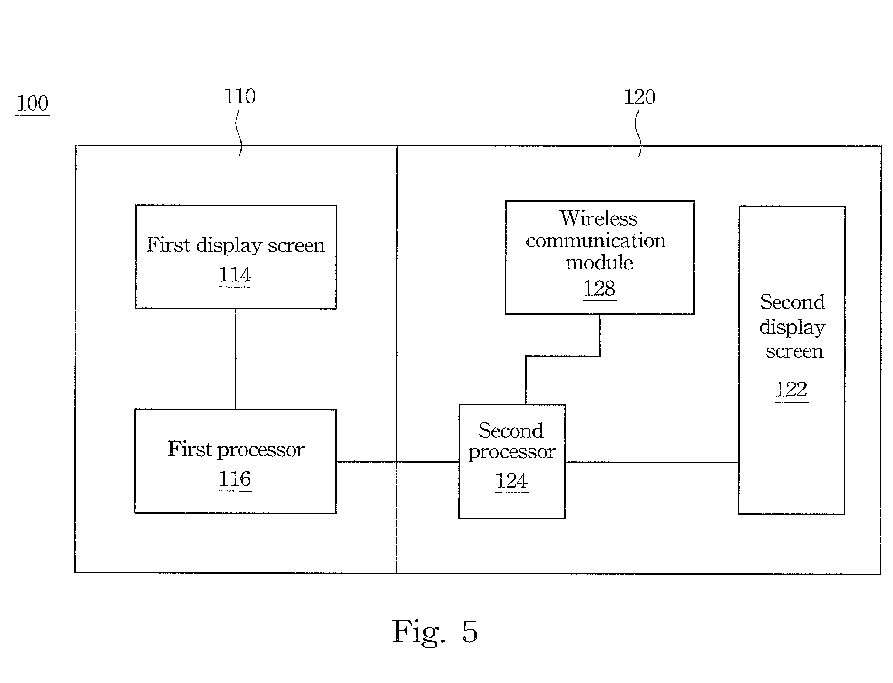

Fig. 5 is a block diagram of a dual screen electronic device 100 according to an embodiment of the present invention. The difference between this embodiment and the aforementioned embodiment shown in Fig. 4 is that the protection cover 120 further includes a wireless communication module 128 electrically connected to the second processor 124 to connect a network service server (thereinafter).

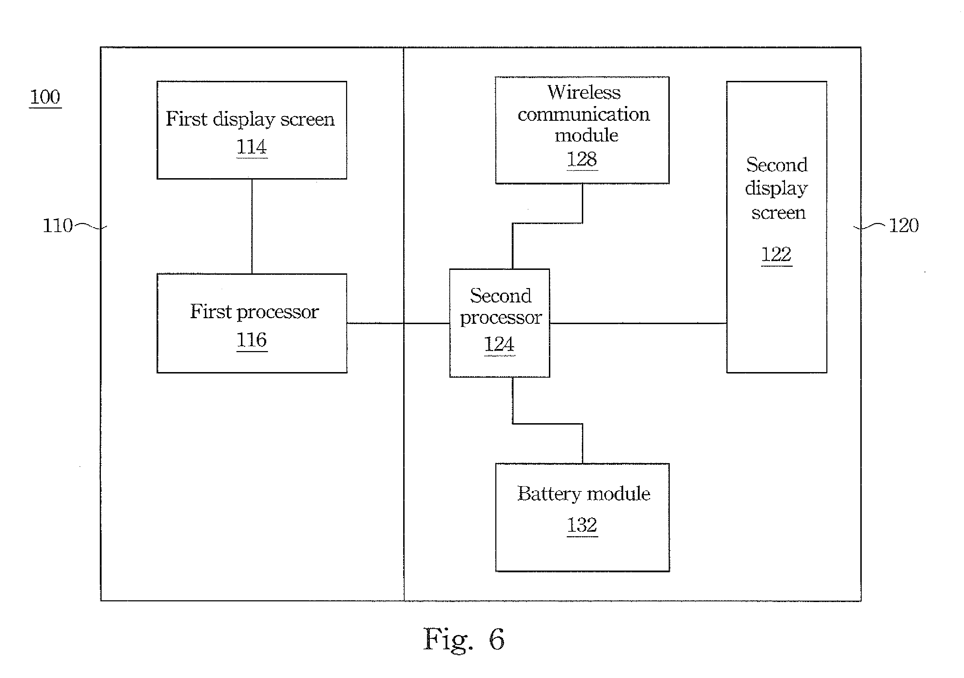

Fig. 6 is a block diagram of a dual screen electronic device 100 according to an embodiment of the present invention. The difference between this embodiment and the aforementioned embodiment shown in Fig. 5 is that the protection cover 120 further includes a battery module 132 electrically connected to the second processor 124 to provide power to the second display screen 122. The battery may include a rechargeable battery.

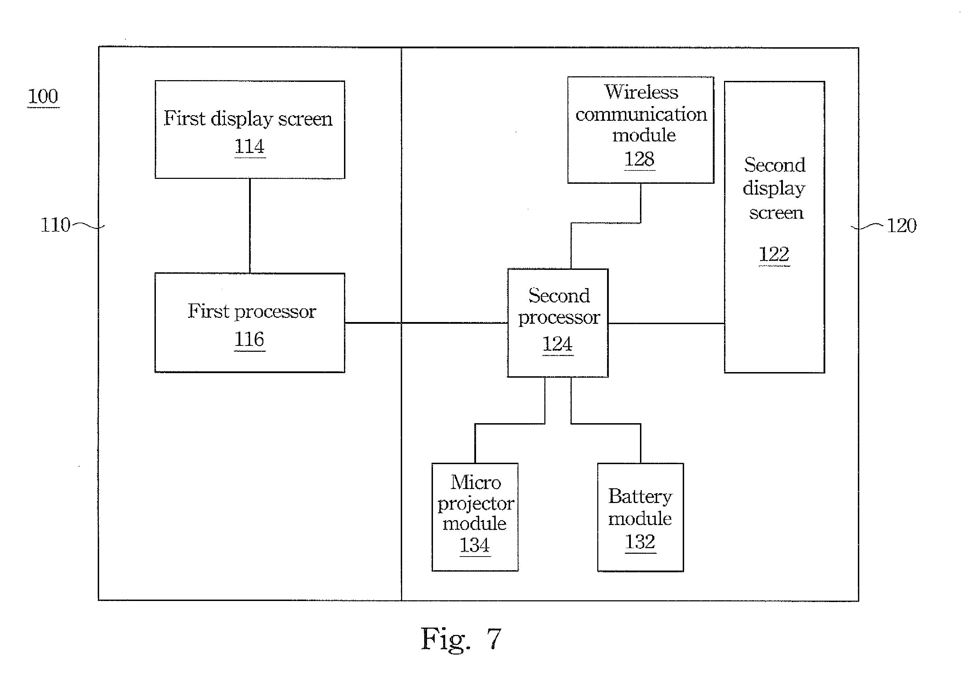

Fig. 7 is a block diagram of a dual screen electronic device 100 according to an embodiment of the present invention. The difference between this embodiment and the aforementioned embodiment shown in Fig. 6 is that the protection cover 120 further includes a micro projector module 134 electrically connected to the second processor 124.

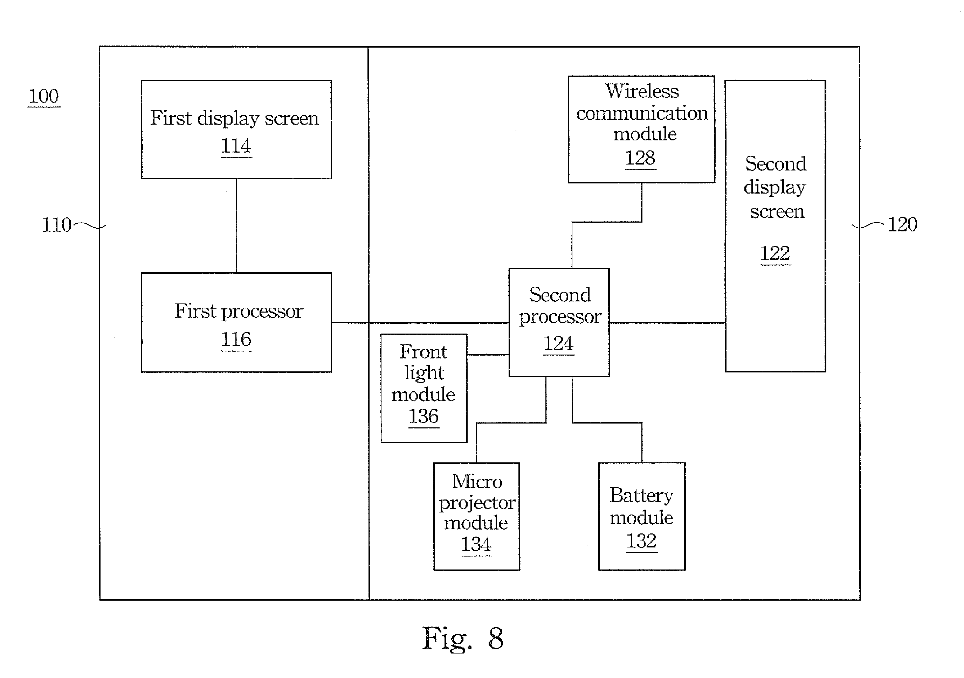

Fig. 8 is a block diagram of a dual screen electronic device 100 according to an embodiment of the present invention. The difference between this embodiment and the aforementioned embodiment shown in Fig. 7 is that the protection cover 120 further includes a front light module 136 electrically connected to the second processor 124 to provide light source for the second display screen 122.

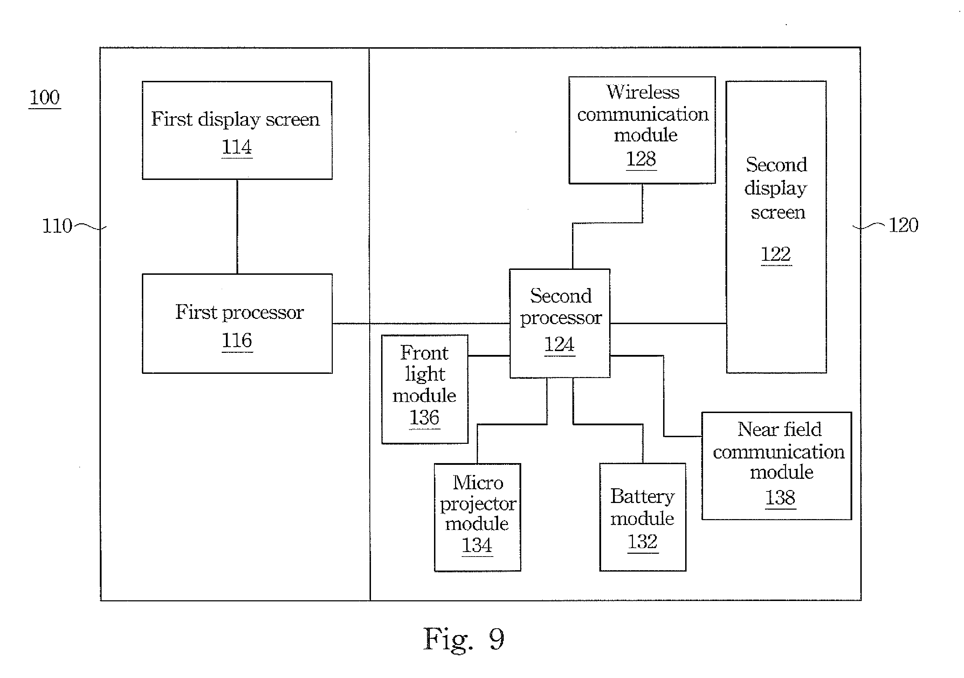

Fig. 9 is a block diagram of a dual screen electronic device 100 according to an embodiment of the present invention. The difference between this embodiment and the aforementioned embodiment shown in Fig. 8 is that the protection cover 120 further includes a near field communication (NFC) module 138 electrically connected to the second processor 124, such that the protection cover 120 can transmit data with other devices.

It is to be noted that the second processor 124, the wireless communication module 128, the battery module 132, the micro projector module 134, the front light module 136, and the near field communication (NFC) module 138 can be selectively mounted on the protection cover 120. Moreover, the main body 110 may also selectively include the second processor 124, the wireless communication module 128, the battery module 132, the micro projector module 134, the front light module 136, and the near field communication module 138 in accordance with designers' requirements, and the present invention is not limited thereto.

As shown in Fig. 9, the wireless communication module 128, the battery module 132, the micro projector module 134, the front light module 136, and the near field communication module 138 may be placed in the main body 110 and connected to the first processor 116.

Furthermore, the second display screen 122 can display for example, e-books, weather information, short message service (SMS), maps, location base service, e-tickets or coupons, advertisement, electronic transactions, micro-projector, and front-light.

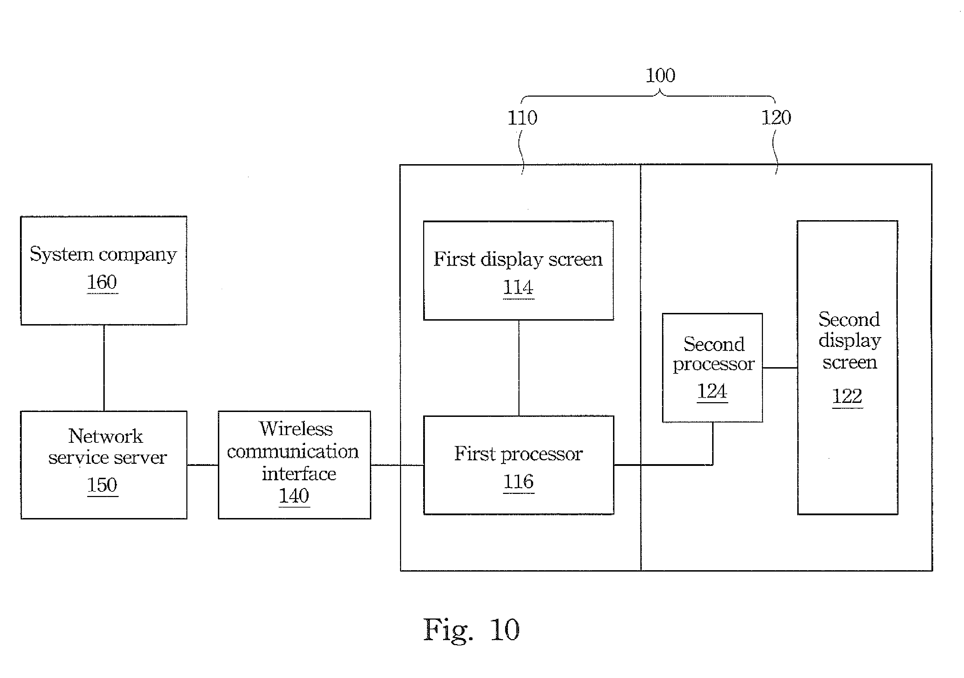

Fig. 10 is a block diagram of a dual screen electronic device 100 connected to a network service server 150 according to an embodiment of the present invention. The main body 110 and the protection cover 120 may be connected to the network service server 150 by a wireless communication interface 140. As a result, the main body 110 and the protection cover 120 can download and upload information to the network service server 150 provided by a system company 160. Moreover, the dual screen electronic device 100 may be connected to the network service server 150 only by the main body 110, such that the first display screen 114 or the second display screen 122 displays the information provided by the network service server 150 by utilizing the software built-in the main body 110. The protection cover 120 shown in Fig. 10 may also be one of the aforementioned protection covers 120 shown in Fig. 3, Fig. 5, Fig. 6, Fig. 7, Fig. 8, and Fig. 9.

The network service server 150 may provide a short message service, weather information, e-mail, e-books, advertisement, electronic transactions, and e-tickets to the dual screen electronic device 100. In addition, the system company 160 may be a telecommunications company, a software development company, or a cellular phone company.

It is to be noted that the connection relationship of the aforementioned elements will not be repeated in the following description, and only the aspects related to an operation method of the dual screen electronic device 100 will be described.

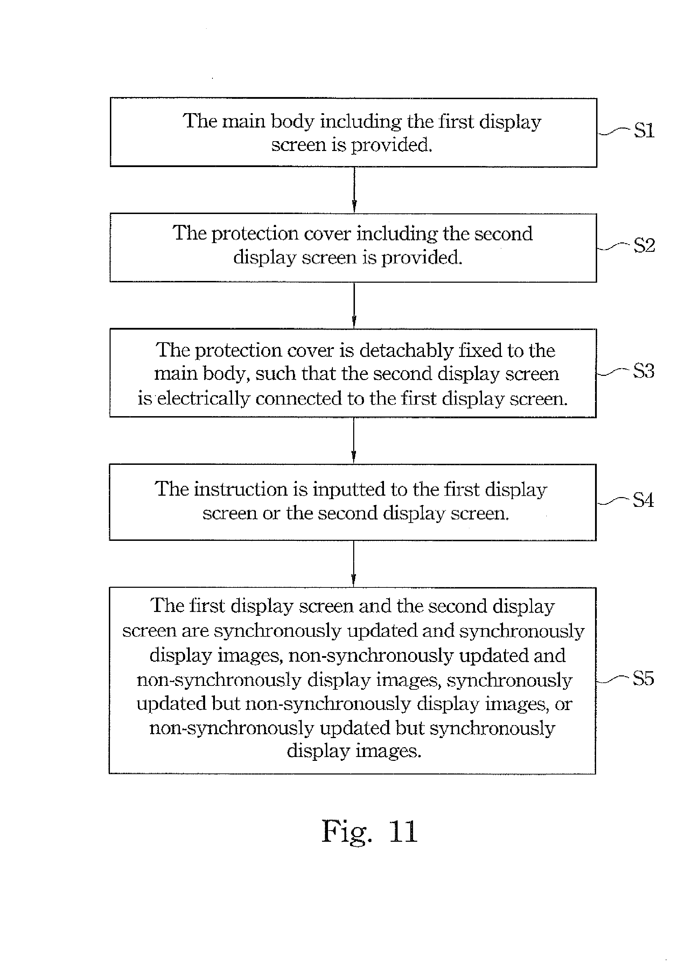

Fig. 11 is a flow chart showing an operation method of the dual screen electronic device 100 shown in Fig.1B. In step S1, the main body including the first display screen is provided. In step S2, the protection cover including the second display screen is provided. In step S3, the protection cover is detachably fixed to the main body, such that the second display screen is electrically connected to the first display screen. In step S4, the instruction is inputted to the first display screen or the second display screen. In step S5, the first display screen and the second display screen are synchronously updated and synchronously display images, non-synchronously updated and non-synchronously display images, synchronously updated but non-synchronously display images, or non-synchronously updated but synchronously display images.

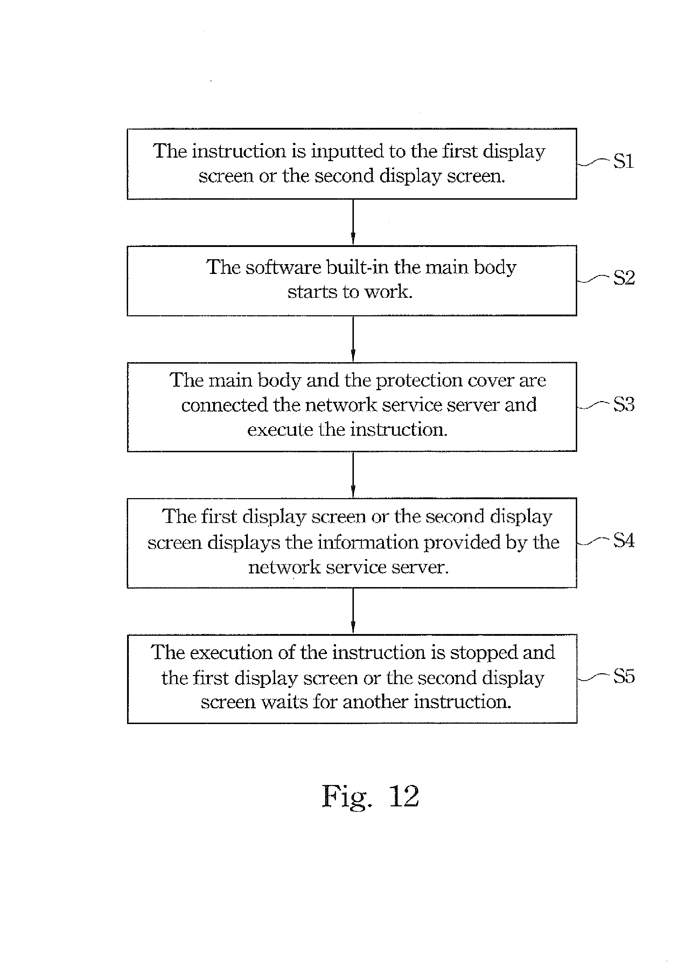

Fig. 12 is a flow chart showing an operation method of the dual screen electronic device 100 shown in Fig.1 B when the dual screen electronic device is connected to the network service server 150 (see Fig. 10). In step S1, the instruction is inputted to the first display screen or the second display screen. In step S2, the software built-in the main body starts to work. In step S3, the main body and the protection cover are connected the network service server and execute the instruction. In step S4, the first display screen or the second display screen displays the information provided by the network service server. In step S5, the execution of the instruction is stopped and the first display screen or the second display screen waits for another instruction.

Compared with a conventional portable electronic device, when the protection cover including the second display screen is fixed on the rear cover, the first display screen and the second display screen are electrically connected to the first processor. Hence, the second display image and the first display image can be controlled by the first processor in accordance with the instruction inputted to the second display screen and the first display screen. The second display screen and the first display screen can be configured to be synchronously updated and synchronously display images, non-synchronously updated and non-synchronously display images, synchronously updated but non-synchronously display images, or non-synchronously updated but synchronously display images by the first processor in accordance with practical requirements. The protection cover may not only include the second display screen, and may also selectively include the wireless communication module, the battery module, or other modules (e.g., the micro projector module), such that when the protection cover is fixed on the main body, the dual screen electronic device may have more useful functions.

The reader's attention is directed to all papers and documents which are filed concurrently with this specification and which are open to public inspection with this specification, and the contents of all such papers and documents are incorporated herein by reference.

## Claims

1. A dual screen electronic device, comprising:
a main body, comprising:
a housing comprising a front frame and a rear cover; and
a first display screen located in the housing and being exposed through the front frame for displaying a first display image;
a protection cover detachably fixed on the rear cover and comprising:
a second display screen for displaying a second display image; and
a first processor located in the housing and electrically connected to the first display screen and the second display screen, wherein the second display image and the first display image are controlled by the first processor in accordance with an instruction inputted to the second display screen and the first display screen, such that the second display image is the same as or different from the first display image.

2. The dual screen electronic device as claimed in claim 1, wherein the protection cover further comprises:
a second processor electrically connected to the second display screen and the first processor for driving the second display screen.

3. The dual screen electronic device as claimed in claim 2, wherein the protection cover further comprises:
a wireless communication module electrically connected to the second processor for connecting a network service server.

4. The dual screen electronic device as claimed in claim 2, wherein the protection cover further comprises:
a battery module electrically connected to the second processor for providing power to the second display screen.

5. The dual screen electronic device as claimed in claim 4, wherein the battery comprises a rechargeable battery.

6. The dual screen electronic device as claimed in claim 2, wherein the protection cover further comprises:
a micro projector module electrically connected to the second processor.

7. The dual screen electronic device as claimed in claim 2, wherein the protection cover further comprises:
a front light module electrically connected to the second processor.

8. The dual screen electronic device as claimed in claim 2, wherein the protection cover further comprises:
a near field communication module electrically connected to the second processor.

9. The dual screen electronic device as claimed in claim 1, wherein the protection cover is a rear cover protection cover or a battery cover protection cover.

10. The dual screen electronic device as claimed in claim 1, wherein the first display screen comprises a liquid crystal display panel, a bi-stable display device, a light emitting diode display panel, or an organic light emitting diode display panel; and the second display screen comprises a liquid crystal display panel, a bi-stable display device, a light emitting diode display panel, or an organic light emitting diode display panel.

11. The dual screen electronic device as claimed in claim 1, wherein the first display screen and the second display screen are touch panels selectively.

12. The dual screen electronic device as claimed in claim 1, wherein the first display screen and the second display screen are flexible screens.

13. An operation method of a dual screen electronic device, comprising the steps of:
providing a main body comprising a first display screen;
providing a protection cover comprising a second display screen;
detachably fixing the protection cover to the main body, such that the second display screen is electrically connected to the first display screen;
inputting an instruction to the first display screen or the second display screen; and
synchronously updating and synchronously displaying, non-synchronously updating and non-synchronously displaying, synchronously updating but non-synchronously displaying, or non-synchronously updating but synchronously displaying the first display screen and the second display screen.

14. The operation method as claimed in claim 13, further comprising:
connecting a network service server to the main body, such that the first display screen or the second display screen displays information provided by the network service server.

15. The operation method as claimed in claim 13, further comprising:
detecting an action located on the first display screen or the second display screen, wherein, when the action is corresponding to a touch instruction stored in the main body, the first display screen or the second display screen executes the touch instruction.

16. The operation method as claimed in claim 15, wherein the touch instruction comprises turning a gesture guide page, dragging or moving content, enlarging and shrinking content, sliding content, unlocking by sliding or moving, and multi touching.

17. The operation method as claimed in claim 13, wherein the step of synchronously updating and synchronously displaying the first display screen and the second display screen comprises:
independently operating the first display screen or the second display screen to enable the first display screen and the second display screen to display the same image.

18. The operation method as claimed in claim 13, wherein the step of non-synchronously updating and non-synchronously displaying the first display screen and the second display screen comprises:
simultaneously operating the first display screen and the second display screen, and the first display screen and the second display screen display different images.

19. The operation method as claimed in claim 13, wherein the step of synchronously updating but non-synchronously displaying the first display screen and the second display screen comprises:
simultaneously operating the first display screen and the second display screen to enable a portion of the first display screen and a portion of the second display screen to display the same image and another portion of the first display screen and another portion of the second display screen to display different images.

20. The operation method as claimed in claim 13, wherein the step of non-synchronously updating but synchronously displaying the first display screen and the second display screen comprises:
independently operating the first display screen or the second display screen to enable the first display screen and the second display screen to display different images.
